# EUROPEAN PATENT SPECIFICATION

(11) **EP 3 450 202 B1**
(45) Date of publication and mention of the grant of the patent: **01.12.2021**
(21) Application number: 18188664.9
(22) Date of filing: 13.08.2018
(51) Int. Cl.: C08L 9/00, B60C 1/00, C08L 7/00, C08K 3/36, C08K 3/04, C08K 9/04, B60C 11/00

(54) **RUBBER COMPOSITION FOR A HEAVY DUTY TIRE WITH NATURAL RUBBER BASED TREAD CONTAINING OXIDIZED CARBON BLACK**
KAUTSCHUKZUSAMMENSETZUNG FÜR EINEN LKW-REIFEN MIT NATÜRLICHER KAUTSCHUKLAUFFLÄCHE MIT OXIDIERTEM RUSS
COMPOSITION DE CAOUTCHOUC POUR PNEU POUR USAGE INTENSIF DOTÉ D'UNE BANDE DE ROULEMENT À BASE DE CAOUTCHOUC NATUREL CONTENANT DU NOIR DE CARBONE OXYDÉ

(30) Priority: 31.08.2017 US 201715691901
(43) Date of publication of application: 06.03.2019
(73) Proprietor: The Goodyear Tire & Rubber Company, Akron, OH 44316 (US)
(72) Inventor: FORCINITI, Leandro, Danville, VA Virginia 24540 (US); SANDSTROM, Paul Harry, Cuyahoga Falls, OH Ohio 44223 (US); JIANG, Yingying, Danville, VA Virginia 24540 (US); BUSCH, Warren James, North Canton, OH Ohio 44720 (US); CERRATO MEZA, Roberto, North Canton, OH Ohio 44720 (US)
(74) Representative: Kutsch, Bernd

(56) References cited:
- EP-A1- 3 339 364
- EP-A1- 3 385 092
- EP-A1- 3 385 316
- EP-A2- 0 761 733
- EP-A2- 1 491 368
- WO-A1-2017/106493
- JP-A- 2013 060 549
- US-A- 4 820 751
- US-A- 5 843 249

## Description

### Field of the Invention

This invention relates to a rubber composition for use in a tread of a pneumatic tire. The tire is preferably a heavy duty tire (e.g. a heavy duty truck tire) intended for significant load bearing capacity. The tread of the tire is of a cap/base construction wherein the outer tread cap rubber layer is intended to be ground-contacting and the tread base rubber layer underlies the outer tread cap rubber layer to thereby provide an interface between the tread cap rubber layer and tire carcass. The elastomer of said tread cap rubber layer or said tread cap rubber layer and and said tread base rubber layer comprise greater than 50 weight percent natural cis 1,4-polyisoprene rubber. The reinforcing filler in the rubber composition contains oxidized rubber reinforcing carbon black.

### Background of the Invention

Heavy duty truck tires with a relatively thick tread composite cross-section typically experience a significant internal heat generation during heavy duty service which thereby promotes an increase in tire tread temperature which can reduce the durability of the tire tread.

Such heavy duty tire internal heat buildup under heavy loads is considered herein to be of a different consideration than internal heat buildup generated in passenger automobile tires and light duty truck tires.

In one aspect, such thicker heavy duty tire tread (e.g. heavy duty truck tire tread/cap base) constitutes a significantly greater rubber tread mass than a relatively thin and smaller tread composite mass of a passenger tire.
Therefore, the working of such heavy duty tires under relatively heavy loads can promote internally generated heat of significantly greater magnitude because of the significantly larger tread composite mass generating a greater amount of internally generated heat combined with greater heat storage capability compared to typically lighter treads and thereby less tread mass of passenger tires. It is desired to promote a reduced hysteresis property of the natural rubber based tread rubber to thereby promote a beneficial reduction of internal heat generation within the tire tread as well as to promote a beneficial reduction of the tire's rolling resistance with a corresponding beneficial increase in fuel economy (reduction in fuel consumption) for an associated vehicle.

Elastomers of rubber compositions of such heavy duty tire tread composites often comprise primarily natural cis 1,4-polyisoprene rubber, with a lesser content of other synthetic elastomers. Use of the natural cis 1,4-polyisoprene rubber in the rubber composition normally promotes, for example, a beneficially greater tear strength to the heavy duty tread rubber composition compared to other synthetic elastomers including synthetic cis 1,4-polyisoprene elastomer.

It is important to appreciate that natural cis 1,4-polyisoprene rubber differs from synthetic cis 1,4-polyisoprene rubber.

In particular, natural 1,4-polyisoprene rubber is obtained from a natural vegetation source (from rubber trees) and normally contains up to 5 weight percent residual content of naturally occurring proteins, fatty acids, resins and organic salts not found in synthetic cis 1,4-polyisoprene.

In contrast, synthetic cis 1,4-polyisoprene rubber is typically obtained by catalytic polymerization of isoprene monomer and therefore does not contain the aforesaid naturally occurring materials found in natural cis 1,4-polyisoprene rubber and may contain polymerization catalyst residues not found in natural cis 1,4-polyisoprene rubber.

Therefore, in such manner, the overall composition of natural cis 1,4-polyisoprene rubber differs from the overall composition of synthetic cis 1,4-polyisoprene rubber by the nature of residual materials contained in the respective elastomers.

Reinforcing fillers are conventionally used in rubber compositions to enhance their physical properties, including rubber compositions which contain natural cis 1,4-polyisoprene rubber. Such reinforcing fillers may include, for example, one or more of rubber reinforcing carbon black and silica, preferably precipitated silica.

For this invention, it is desired to evaluate providing a rubber composition containing natural cis 1,4-polyisoprene rubber with reinforcing filler comprising rubber reinforcing carbon black which contains a significant content of oxidized rubber reinforcing carbon black for a tire tread such as, for example, an outer tread cap rubber layer, underlying tread base rubber layer, or their combination, particularly for a heavy duty intended tire tread of a cap/base configuration.

Rubber reinforcing carbon black may be the product of incomplete combustion of, for example, petroleum based products such as, for example, petroleum based oils, under controlled conditions. In one embodiment, it is envisioned that the surface of rubber reinforcing carbon black may, in some circumstances, contain small amounts of carboxyl and/or hydroxyl groups. If so, it is envisioned, for example, that only from 0.5 to 1.5 percent of its surface may contain such groups.

Rubber reinforcing carbon black may be subsequently oxidized (e.g. post oxidized) by treatment with, for example, one or more of hydrogen peroxide and ozone to thereby modify its surface. While the modified (e.g. oxidized) surface of the oxidized rubber reinforcing carbon black may be of various characterizations and contain various constituents, one characterization may be a percent of its surface containing carboxyl and/or hydroxyl groups being in a range of, for example, from 3 to 8, alternately from 4 to 8, percent which is considered herein to be a significant increase over the aforesaid potential surface content thereof, if any, for the rubber reinforcing carbon black which has not been post-oxidized with hydrogen peroxide and/or ozone treatment. Further, it is possible that the rubber reinforcing ability of the oxidized rubber reinforcing carbon black may be adversely affected and possibly reduced.

Accordingly, it is desired to evaluate use of oxidized rubber reinforcing carbon black for reinforcement of the natural rubber-rich rubber composition (rubber composition for which a significant portion of its elastomer content is natural rubber), particularly for use as a tire tread component, in a form of oxidized rubber reinforcing carbon black in a sense of such carbon black being oxidized (e.g. post-oxidized) by treatment with one or more of hydrogen peroxide and ozone.

For undertaking such evaluation, it is envisioned that the aforesaid resultant significant content of carboxyl and/or hydroxyl groups on the rubber reinforcing carbon black may interact with the aforesaid protein and/or fatty acids contained in the natural cis 1,4-polyisoprene rubber (not present in synthetic cis 1,4-polyisoprene rubber) to promote increased filler-to-elastomer interaction, namely an interaction of the aforesaid carboxyl and/or hydroxyl group-containing surface of the oxidized carbon black with the protein and fatty acid containing natural rubber. Such undertaking is to evaluate whether such interaction may promote or be detrimental to promotion of a beneficial reduction of hysteresis of the rubber of the tread cap rubber layer, tread base rubber layer, or their combination, where such reduction of hysteresis of the rubber composition may act to promote a beneficial reduction in internal heat generation for the rubber composition of a tire tread component during tire operational service (e.g. for a tire tread component such as, for example, its outer tread cap rubber layer and/or underlying tread base rubber layer).

It is appreciated that such beneficial reduction of hysteresis of the rubber composition may be evidenced by one or more of an increase in a rubber composition's rebound physical property, particularly a hot rebound property, and/or a reduction in the rubber composition's tangent delta (tan delta) physical property.

The term "phr" where used herein means "parts per weight of a specified material per 100 parts by weight rubber, or elastomer, in a rubber composition". The terms "rubber" and "elastomer" may be used interchangeably unless otherwise indicated. The terms "compound" and "rubber composition" may be used interchangeably unless otherwise indicated.

The glass transition temperature (Tg) of elastomers is determined as a peak midpoint by a differential scanning calorimeter (DSC) at a temperature rate of increase of 10°C per minute according to ASTM D7426-08 (2013).

A softening point of a resin is determined by ASTM E28-14, which may sometimes be referred to as a ring and ball softening point.

A reference to a cis-1,4-polybutadiene or a cis 1,4-polyisoprene means a polybutadiene or polyisoprene respectively having at least 90 percent cis-content, preferably at least 92 percent cis-content or at least 95 percent cis-content.

### Summary and Practice of the Invention

The invention relates to a tire in accordance with claim 1.

Dependent claims refer to preferred embodiments of the invention.

In accordance with a preferred aspect of this invention, a heavy duty tire (i.e. a tire intended for heavy duty service) is provided with a circumferential tread of a cap/base configuration comprising a circumferential outer tread cap rubber layer which contains a running surface for the tire and a tread base rubber layer underlying said tread cap rubber layer, wherein said tread cap rubber layer or said tread cap rubber layer and said tread base rubber layer comprises a rubber composition containing natural cis 1,4 polyisoprene rubber where said rubber composition comprises, based upon 100 parts by weight rubber (phr);
(A) 100 parts by weight conjugated diene-based elastomer(s) comprising:
   (1) natural cis 1,4-polyisoprene rubber, or
   (2) natural cis 1,4-polyisoprene rubber and from 5 up to 50, alternately 10 to 30, and alternately 10 to 20 or from 5 to 20, phr of additional synthetic diene-based rubber comprising at least one of synthetic cis 1,4-polyisoprene rubber, cis 1,4 polybutadiene rubber and styrene/butadiene rubber, wherein said additional synthetic rubber is desirably at least one of cis 1,4-polybutadiene and styrene/butadiene rubber,
(B) 30 to 100, alternately 40 to 75, phr of rubber reinforcing filler containing oxidized rubber reinforcing carbon black, said oxidized rubber reinforcing carbon black preferably having from 3 to 8, alternately 4 to 8, percent of its surface containing a combination of carboxyl and hydroxyl groups where said reinforcing filler is comprises
   (1) carbon black comprising at least one of rubber reinforcing carbon black and said oxidized rubber reinforcing carbon black, provided that said carbon black contains 25 to 100, alternately 50 to 75, weight percent of said oxidized carbon back, or
   (2) a combination of precipitated silica and carbon black comprising of from 5 to 40 weight percent of said silica or precipitated silica, wherein said carbon black comprises at least one of rubber reinforcing carbon black and oxidized rubber reinforcing carbon black, provided that said carbon black contains 25 to 100, alternately from 50 to 75, weight percent of said oxidized rubber reinforcing carbon black, and wherein silica coupler is provided for said silica or precipitated silica having a moiety reactive with hydroxyl groups (e.g. silanol groups) on the surface of said silica and another different moiety interactive with said conjugated diene-based elastomers.

In accordance with a preferred aspect of this invention, the natural cis 1,4-polyisoprene rubber contains 2 to 7, alternately 3 to 5, weight percent thereof of protein, fatty acid, resin and organic salt.

In one embodiment, said rubber reinforcing carbon black is a product of incomplete combustion of feed stocks derived from petroleum oil or coal, wherein 0.5 to 1.5 percent of its surface may contain at least one of carboxyl and hydroxyl groups or their combination. A reference to production and classifications of rubber reinforcing carbon black may be found in, for example, The Vanderbilt Rubber Handbook, (1978, Pages 408 through 417.

In accordance with a preferred aspect of this invention, said oxidized rubber reinforcing carbon black comprises rubber reinforcing carbon black oxidized by treatment with at least one of hydrogen peroxide and ozone for which 3 to 8, alternately from 4 to 8, percent of its surface contains at least one of carboxyl and hydroxyl groups, particularly a combination of carboxyl and hydroxyl groups.

In accordance with a preferred aspect of this invention, said elastomer of said tread base rubber composition comprises natural cis 1,4-polyisoprene rubber which contains, for example, 35 to 70 phr of said reinforcing filler comprising rubber reinforcing carbon black or said combination of rubber reinforcing carbon black and oxidized rubber reinforcing carbon black.

In accordance with a preferred aspect of this invention, said tread cap rubber layer comprises said tread cap rubber composition containing said natural cis 1,4-polyisoprene rubber which contains said reinforcing filler which contains said oxidized rubber reinforcing carbon black and said tread base rubber layer comprises said tread base rubber composition which contains said reinforcing filler comprised of rubber reinforcing carbon black and said oxidized rubber reinforcing carbon black.

In one embodiment, said silica coupler for the silica or precipitated silica comprises:
(A) bis(3-trialkoxysilylalkyl) polysulfide containing an average of from 2 to 4, alternately from 2 to 2.6 or from 3.2 to 3.8, connecting sulfur atoms in its polysulfidic bridge, or
(B) an alkoxyorganomercaptosilane.

Representative of the bis(3-trialkoxysilylalkyl) polysulfide is bis(3-triethoxysilylpropyl) polysulfide.

In one embodiment, it is understood that such oxidized rubber reinforcing carbon black may be produced, for example, by hydrogen peroxide or ozone treatment of a conventional rubber reinforcing carbon black, to produce a carbon black that contains carboxyl and hydroxyl groups on its surface. For example, see US-A-2013/0046064.

Accordingly, in one embodiment, such oxidized carbon black is at least one of hydrogen peroxide or ozone treated rubber reinforcing carbon black.

Accordingly, as indicated, such oxidized carbon black is a rubber reinforcing carbon black containing at least one of, and generally a combination of, carboxyl and hydroxyl groups on its surface.

Representative examples of conventional rubber reinforcing carbon blacks (non-oxidized rubber reinforcing carbon blacks) are, for example referenced in The Vanderbilt Rubber Handbook, 13th edition, 1990, on Pages 417 and 418 with their ASTM designations. Such rubber reinforcing carbon blacks may have iodine absorptions ranging from, for example and not intended to be limiting, 60 to 240 g/kg, and DBP values ranging from, for example and not intended to be limiting, 34 to 180 cc/100 g.

It is readily understood by those having skill in the art that the vulcanizable rubber composition would be compounded by methods generally known in the rubber compounding art. In addition, said compositions could also contain fatty acid, zinc oxide, waxes, antioxidants, antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts.

Usually it is desired that the sulfur-vulcanizing agent is elemental sulfur. The sulfur vulcanizing agent may be used in an amount ranging, for example, from 0.5 to 8 phr, with a range of from 1.5 to 6 phr being often preferred.

The rubber composition may also contain petroleum based rubber processing oil and/or vegetable triglyceride oil (e.g. comprising at least one of soybean, sunflower, rapeseed and canola oil).

Typical amounts of antioxidants may comprise, for example, 1 to 5 phr thereof. Representative antioxidants may be, for example, diphenyl-paraphenylenediamine and others, such as, for example, those disclosed in The Vanderbilt Rubber Handbook (1978), Pages 344 through 346. Typical amounts of antiozonants may comprise, for example, 1 to 5 phr thereof. Typical amounts of fatty acids, if used, which can include stearic acid, comprise 0.5 to 3 phr thereof. Typical amounts of zinc oxide may comprise, for example, 2 to 5 phr thereof. Typical amounts of waxes comprise 1 to 5 phr thereof. Often microcrystalline waxes are used. Typical amounts of peptizers, when used, may be used in amounts of, for example, 0.1 to 1 phr thereof. Typical peptizers may be, for example, pentachlorothiophenol and dibenzamidodiphenyl disulfide.

Sulfur vulcanization accelerators are used to control the time and/or temperature required for vulcanization and to improve the properties of the vulcanizate. In one embodiment, a single accelerator system may be used, i.e., primary accelerator. The primary accelerator(s) may be used in total amounts ranging, for example, from 0.5 to 4, sometimes desirably 0.8 to 1.5, phr. In another embodiment, combinations of a primary and a secondary accelerator might be used with the secondary accelerator being used in smaller amounts, such as, for example, from 0.05 to 3 phr, to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, sulfenamides, and xanthates. Often desirably the primary accelerator is a sulfenamide. If a second accelerator is used, the secondary accelerator is often desirably a guanidine such as for example a diphenylguanidine.

The mixing of the vulcanizable rubber composition can be accomplished by methods known to those having skill in the rubber mixing art. For example, the ingredients are typically mixed in at least two stages, namely at least one non-productive stage followed by a productive mix stage. The final curatives, including sulfur vulcanizing agents, are typically mixed in the final stage which is conventionally called the "productive" mix stage in which the mixing typically occurs at a temperature, or ultimate temperature, lower than the mixing temperature(s) of the preceding non-productive mix stage(s). The rubber composition may be subjected to a thermomechanical mixing step. The thermomechanical mixing step generally comprises a mechanical working in a mixer or extruder for a period of time suitable to produce a rubber temperature of, for example, between 140°C and 190°C. The appropriate duration of the thermomechanical working varies as a function of the operating conditions and the volume and nature of the components. For example, the thermomechanical working may be from 1 to 20 minutes, as may be appropriate.

Vulcanization of the pneumatic tire containing the tire tread of the present invention is generally carried out at conventional temperatures in a range of, for example, from 125°C to 200°C. Often it is desired that the vulcanization is conducted at temperatures ranging from 150°C to 180°C. Any of the usual vulcanization processes may be used such as heating in a press or mold, heating with superheated steam or hot air. Such tires can be built, shaped, molded and cured by various methods which are known and are readily apparent to those having skill in such art.

The following examples are presented for the purposes of illustrating the present invention. The parts and percentages are parts by weight, per 100 parts by weight rubber (phr) unless otherwise indicated.

### EXAMPLE I

Rubber compositions containing a combination of natural cis 1,4-polyisoprene and cis 1,4-polybutadiene elastomers in a 20/80 weight ratio and reinforcing filler comprising rubber reinforcing carbon black and oxidized rubber reinforcing carbon black are evaluated.

Control rubber Sample A is provided which contains a combination of cis 1,4 polyisoprene natural rubber and cis 1,4-polybutadiene elastomers in a 20/80 weight ratio with a reinforcing filler comprising 50 phr of non-post-oxidized rubber reinforcing carbon black as N234, an ASTM designation.

Experimental rubber Sample B is provided which contains the combination of cis 1,4-polyisoprene natural rubber and cis 1,4-polybutadiene in a 20/80 weight ratio with rubber reinforcing carbon black where the rubber reinforcing carbon black is replaced with oxidized N234 rubber reinforcing carbon black.

The basic rubber compositions are summarized in the following Table 1. The parts and percentages are by weight unless otherwise indicated.

**Table 1**

| Material | Parts by weight (phr) |
|---|---|
| Non Productive mixing (NP) | |
| Natural rubber (cis 1,4-polyisoprene) | 20 |
| Cis 1,4-polybutadiene rubber¹ | 80 |
| Rubber reinforcing carbon black (N234)² | 0 or 50 |
| Surface oxidized N234 carbon black³ | 0 or 50 |
| Petroleum based rubber processing oil | 3 |
| Zinc oxide | 3 |
| Fatty acids⁴ | 2.5 |

| Productive mixing (P) | |
|---|---|
| Antioxidant | 0.5 |
| Sulfur and cure accelerator⁵ | 2.6 |

| | |
|---|---|
| ¹Cis 1,4-polybutadiene as BUD 4001^{™} from The Goodyear Tire & Rubber Company ²Carbon black as N234, an ASTM designation ³Surface oxidized N234 carbon black as CD2125XZ from the Birla Carbon Company understood to have a range of from 4 to 8 percent of its surface containing a combination of carboxyl and hydroxyl groups ⁴Fatty acids comprising stearic, palmitic and oleic acids ⁵Sulfur cure accelerator as sulfenamide | |

The rubber Samples were prepared by sequential mixing steps in an internal rubber mixer comprising two sequential non-productive (NP) mixing steps to a mixing temperature of about 160°C without sulfur curatives followed by a productive (P) mixing step in which sulfur and sulfur cure accelerator(s) were added to a mixing temperature of about 110°C.

The following Table 2 illustrates cure behavior and various physical properties of rubber compositions based upon the formulations of Table 1 and reported herein as Control rubber Sample A and Experimental rubber Sample B. Where cured rubber samples are reported, such as for the stress-strain, rebound and abrasion values, the rubber samples were cured for about 32 minutes at a temperature of about 150°C.

**Table 2**

| Material | Parts by Weight (phr) | |
|---|---|---|
| | Control Sample A | Experimental Sample B |
| Natural rubber (cis 1,4-polyisoprene rubber) | 20 | 20 |
| Cis 1,4-polybutadiene rubber | 80 | 80 |
| Rubber reinforcing carbon black (N234) | 50 | 0 |
| Surface oxidized N234 carbon black | 0 | 50 |
| | | |

| Properties of Rubber Compounds Processability of Uncured Rubber, RPA test¹ | | |
|---|---|---|
| Uncured storage modulus (G'), (kPa), 0.83 Hertz, 100°C, 15% strain | 186 | 159 |
| | | |

| Stiffness of Cured Rubber Low and Medium Strain. RPA Test | | |
|---|---|---|
| Storage modulus (G'). (kPa) | | |
| 1 Hertz, 10% strain, 100°C | 1254 | 1118 |
| 1 Hertz, 50% Strain, 100°C | 847 | 804 |
| | | |

| Hysteresis Prediction | | |
|---|---|---|
| Rebound (100°C, %, higher is better) | 59 | 62 |
| | | |

| Tear Resistance², 95°C | | |
|---|---|---|
| Newtons (higher is better) | 199 | 128 |
| | | |

| Predictive Treadwear Resistance | | |
|---|---|---|
| Grosch abrasion rate, high severity³ | | |
| (lower values are better) | 254 | 619 |

| | | |
|---|---|---|
| ¹RPA test: test of rubber samples with Rubber Process Analyzer instrument which is an instrument for determining various viscoelastic properties of rubber samples including storage modulus (G') and tangent delta (tan delta) physical properties at various temperatures and frequencies at various torsions sometimes referred to as "percent strains" (dynamic elongations). ²Data obtained according to a tear strength (tear resistance) test to determine interfacial adhesion between two samples of a rubber composition. Such interfacial adhesion is determined by pulling one rubber composition away from the other at a right angle to the untorn test specimen with the two ends of the rubber compositions being pulled apart at a 180° angle to each other using an Instron instrument at 95°C and reported as Newtons force. ³Grosch abrasion rate (high severity) mg/km of rubber abraded away. The test rubber sample is placed at a slip angle under constant load (Newtons) as it traverses a given distance on a rotating abrasive disk (disk from HB Schleifmittel GmbH). A high abrasion severity test may be run, for example, at a load of 70 newtons, 12° slip angle, disk speed of 20 km/hr for a distance of 250 meters. | | |

From Table 2 it is observed that:

### (A) Processability of the Uncured Rubber Composition

Substitution of the surface oxidized carbon black (Experimental rubber Sample B) is observed to significantly decrease the uncured storage modulus (G') of the rubber composition to a value of 159 kPa compared to a value of 186 kPa for Control rubber Sample A which contained carbon black which had not been surface oxidized. This might reflect a minimum interaction of the oxidized carbon black with the compound containing a high level of cis 1,4-polybutadiene. This would be a positive feature for rubber composition extrusion and processability.

### (B) Stiffness of Cured Rubber. Low (10 percent) and Medium Strain (50 percent) Stiffness

Substitution of the surface oxidized carbon black (Experimental rubber Sample B) resulted in reduced cured rubber stiffness values of 1118 and 804 KPa, respectively, for the 10 and 50 percent strains compared to values of 1254 and 841 KPa, respectively, for Control rubber Sample A which contained carbon black which had not been surface oxidized.

### (C) Predictive Hysteresis Property

The hot rebound property showed an increase for Experimental rubber Sample B which contained the oxidized carbon black to a value of 62 compared to a lesser value of 59 for Control rubber Sample A without the oxidized carbon back, which is an indication of a small reduction of the predictive hysteresis property for the rubber composition to thereby beneficially promote a small reduction in internal heat generation within the rubber composition during tire service.

### (D) Tear Resistance (Test at 95°C)

Inclusion of the surface oxidized carbon black in the rubber composition of rubber Sample B is observed to decrease the tear resistance property to a value of 128 Newtons compared to a value of 199 Newtons for Control rubber Sample A which contained carbon black which had not been surface oxidized.

### (E) Predictive Treadwear Resistance

Inclusion of the surface oxidized carbon black in the rubber composition of rubber Sample B is observed to significantly increase the Grosch rate of abrasion for the cured rubber composition to a value of 619, thereby predicting a significant tire treadwear loss (increase in predictive treadwear) for such rubber composition containing such oxidized carbon black, when compared to the abrasion value of 254 for the Control rubber Sample A without the surface oxidized carbon black.

Therefore, it is concluded that substituting the oxidized rubber reinforcing carbon black for rubber reinforcing carbon black in a rubber composition comprising natural rubber and cis 1,4-polybutadiene rubbers in a 20/80 weight ratio gave the following results:
(A) improved uncured rubber processing,
(B) reduced cured rubber stiffness,
(C) slight improvement in cured rubber hysteresis, and
(D) loss of tear and abrasion resistance for the cured rubber composition.

### EXAMPLE II

Rubber compositions were prepared in the manner of Example I except that the elastomers were compriing a combination of natural cis 1,4-polyisoprene and cis 1,4-polybutadiene elastomers in a 60/40 weight ratio to thereby increase the natural rubber content.

Control rubber Sample C and Experimental rubber Sample D contained a combination of cis 1,4-polyisoprene and cis 1,4-polybutadiene elastomers in a 60/40 weight ratio.

Control rubber Sample C contained the N234 rubber reinforcing carbon black. Experimental rubber Sample D contained the oxidized N234 rubber reinforcing carbon back.

The rubber Samples were tested in the manner of Example I.

The following Table 3 illustrates processing behavior and various physical properties of cured rubber compositions.

**Table 3**

| Material | Parts by Weight (phr) | |
|---|---|---|
| | Control Sample C | Experimental Sample D |
| Natural rubber (cis 1,4-polyisoprene rubber) | 60 | 60 |
| Cis 1,4-polybutadiene rubber | 40 | 40 |
| Rubber reinforcing carbon black (N234) | 50 | 0 |
| Surface oxidized N234 carbon black | 0 | 50 |
| | | |

| Properties of Rubber Compounds Processability of Uncured Rubber, RPA¹ | | |
|---|---|---|
| Uncured storage modulus (G'), (kPa) 0.83 Hertz, 100°C, 15% strain | 202 | 219 |
| | | |

| Stiffness of Cured Rubber Low Strain, ARES Test⁴ | | |
|---|---|---|
| Storage modulus (G'). (kPa) 10 Hertz, 10% strain, 90°C | 1785 | 1782 |
| | | |

| High Strain, Tensile Test | | |
|---|---|---|
| Modulus, 300% strain, (MPa) | 14.7 | 11.2 |
| | | |

| Hysteresis Prediction | | |
|---|---|---|
| Rebound (100°C, %, higher is better) ARES test⁴, | | |
| 10 Hz, 10% strain, 90°C | 64 | 65 |
| Tan delta (lower is better) | 0.148 | 0.130 |
| | | |

| Tear Resistance, 95°C³ | | |
|---|---|---|
| Newtons (higher is better) | 124 | 147 |
| | | |

| Predictive Treadwear Resistance | | |
|---|---|---|
| DIN abrasion⁵ (lower values are better) | 71 | 89 |
| Grosch abrasion rate, high severity⁵ (lower values are better) | 590 | 886 |

| | | |
|---|---|---|
| ⁴ARES test: test of rubber samples with an ARES Rotational Rheometer rubber analysis instrument which is an instrument for determining various viscoelastic properties of rubber samples, including their storage modulii (G') over a range of frequencies and temperatures in torsion. ⁵DIN abrasion test, ASTM D5963, DIN 53516 | | |

The RPA, tear resistance and Grosch abrasion rate tests are referred to in Example I.

From Table 3 it is observed that:

### (A) Processability of the Uncured Rubber Composition

Substitution of the surface oxidized carbon black (Experimental rubber Sample D) is observed to somewhat increase the uncured storage modulus (G') of the rubber composition to a value of 219 kPa compared to a value of 202 kPa for Control rubber Sample C which contained carbon black which had not been surface oxidized. Therefore, the complete substitution of the surface oxidized carbon black in a rubber composition containing 60 phr of natural rubber was observed to increase the storage modulus G', in contrast to Example I in which the viscosity was reduced when the natural rubber content was at 20 phr and cis 1,4polybutadiene content was at 80 phr. A slight negative impact on processing might be observed with this rubber composition for its rubber processing such as, for example, during extrusion or a calendaring of the rubber composition.

### (B) Stiffness of Cured Rubber, Low Strain (10 percent) Modulus

Substitution of the surface oxidized carbon black (Experimental rubber Sample D) is observed to maintain the stiffness of the cured rubber composition (G') at low strain of 10 percent when compared to Control rubber Sample C which contained carbon black which had not been surface oxidized.

### (C) Stiffness of Cured Rubber. High Strain (300 percent) Modulus

Inclusion of the surface oxidized carbon black (Experimental rubber Sample D) is observed to decrease the 300 percent modulus of the cured rubber to a value of 11.2 MPa compared to a value of 14.7MPa for Control rubber Sample C which contained carbon black which had not been surface oxidized.

### (D) Hysteresis Prediction

The hot rebound property for Experimental rubber Sample D which contained the oxidized carbon black had a slightly higher value when compared to Control rubber Sample C without the oxidized carbon back. However, it is also observed that the tan delta property of the Control rubber Sample C of 0.148 was more significantly reduced to a value of 0.130 for Experimental rubber Sample D by addition of the surface oxidized carbon black, which indicates a beneficially reduced hysteresis for the Experimental rubber composition Sample D based on its tan delta property.

### (E) Tear Resistance (Test at 95°C)

Inclusion of the surface oxidized carbon black in the rubber composition of Experimental rubber Sample D is observed to provide a beneficial increase in tear resistance property to a value of 147 Newtons as compared to a value of 124 Newtons for Control rubber Sample C which contained carbon black which had not been surface oxidized.

### (F) Predictive Treadwear Resistance

Inclusion of the surface oxidized carbon black in the rubber composition of Experimental rubber Sample D is observed to increase the DIN abrasion of the rubber composition to a value of 89 and increase the Grosch rate of abrasion to a value of 886, thereby predicting an increase in predictive treadwear for such rubber composition containing such oxidized carbon black, when compared to the abrasion and rate of abrasion values of 71 and 590, respectively, for the Control rubber Sample C without the surface oxidized carbon black.

Therefore, it is concluded that substituting the oxidized rubber reinforcing carbon black for rubber reinforcing carbon black in the rubber composition comprising natural rubber and cis 1,4-polybutadiene rubbers in a 60/40 weight ratio thereof resulted in improved hysteresis compared to Example I for a 20/80 ratio of natural rubber and cis 1,4-polybutadiene, and also resulted in beneficially improved tear and loss of abrasion resistance, as compared to a reduction of both properties in Example I when using a lower level of natural rubber in the rubber composition.

### EXAMPLE III

Rubber compositions were prepared in the manner of Example I except that the elastomer was comprised entirely of natural cis 1,4-polyisoprene rubber.

Control rubber Sample E contained the N234 rubber reinforcing carbon black.

Experimental rubber Sample F contained the oxidized N234 rubber reinforcing carbon back.

The rubber Samples were tested in the manner of Example I. The following Table 4 illustrates processing behavior of uncured compositions and various physical properties of cured rubber compositions.

**Table 4**

| Material | Parts by Weight (phr) | |
|---|---|---|
| | Control Sample E | Experimental Sample F |
| Natural rubber (cis 1,4-polyisoprene rubber) | 100 | 100 |
| Rubber reinforcing carbon black (N234) | 50 | 0 |
| Surface oxidized N234 carbon black | 0 | 50 |
| | | |

| Properties of Rubber Compounds Processability of Uncured Rubber, RPA¹ | | |
|---|---|---|
| Uncured storage modulus (G'), (kPa) 0.83 Hertz, 100°C, 15% strain | 160 | 170 |
| | | |

| Stiffness of Cured Rubber Low Strain, ARES Test² | | |
|---|---|---|
| Storage modulus (G'). (kPa) 10 Hertz, 10% strain, 90°C | 1215 | 1078 |
| | | |

| High Strain, Tensile Test | | |
|---|---|---|
| Modulus, 300% strain, (MPa) | 9.8 | 8.8 |
| | | |

| Hysteresis Prediction | | |
|---|---|---|
| Rebound (100°C, %, higher is better) ARES Test⁴, | | |
| 10 Hz, 10% strain, 90°C | 59 | 73 |
| Tan delta (lower is better) | 0.184 | 0.081 |
| | | |

| Tear Resistance. 95°C³ | | |
|---|---|---|
| Newtons (higher is better) | 252 | 239 |
| | | |

| Predictive Treadwear Resistance | | |
|---|---|---|
| DIN abrasion⁵ (lower values are better) | 178 | 162 |

The RPA, ARES, tear resistance, and abrasion tests are referred to in the previous Examples.

From Table 4 it is observed that:

### (A) Processability of the Uncured Rubber Composition

Substitution of the surface oxidized carbon black (Experimental rubber Sample F) is observed to increase the uncured storage modulus (G') of the rubber composition to a value of 170 kPa as compared to a value of 160 kPa for Control rubber Sample E which contained carbon black which had not been surface oxidized. Therefore, the complete substitution of the surface oxidized carbon black would have a somewhat negative impact on processing of the uncured rubber composition such as, for example, by extrusion and calendering.

### (B) Stiffness of Cured Rubber. Low Strain (10 percent) Modulus

Substitution of the surface oxidized carbon black (Experimental rubber Sample F) is observed to decrease the stiffness of the cured rubber composition (G') at low strain of 10 percent to a value of 1078 kPa as compared to a value of 1215 kPa for Control rubber Sample E which contained carbon black which had not been surface oxidized. Therefore, it is concluded that the complete substitution of the surface oxidized carbon black reduced the stiffness of the cured rubber composition at low strain for a natural rubber based rubber composition.

### (C) Stiffness of Cured Rubber, High Strain (300 percent) Modulus

Inclusion of the surface oxidized carbon black (Experimental rubber Sample F) is observed to decrease the 300 percent modulus of the cured rubber to a value of 8.8 MPa compared to a value of 9.8 MPa for Control rubber Sample E which contained carbon black which had not been surface oxidized.

### (D) Hysteresis Prediction

The hot rebound property was beneficially increased for Experimental rubber Sample F which contained the oxidized carbon black to a value of 73 compared to a value of 59 for Control rubber Sample E without the oxidized carbon back, which is an indication of a reduction of the predictive hysteresis property for the rubber composition to thereby promote a reduction in internal heat generation within the rubber composition during tire service.

It is also observed that the tan delta property of the Control rubber Sample E of 0.184 was dramatically beneficially reduced to a value of 0.081 for Experimental rubber Sample F by addition of the surface oxidized carbon black, which is a further indication of reduced hysteresis for the rubber composition as was previously also indicated by the increase in hot rebound property for the rubber composition.

### (E) Tear Resistance (test at 95°C)

Inclusion of the surface oxidized carbon black in the rubber composition of Experimental rubber Sample F is observed to provide a small decrease in tear resistance property to a value of 239 Newtons compared to a value of 252 Newtons for Control rubber Sample E which contained carbon black which had not been surface oxidized. The value of 239 Newtons still represents a significant tear performance for this compound.

### (F) Predictive Treadwear Resistance

Inclusion of the surface oxidized carbon black in the rubber composition of Experimental rubber Sample F is observed to decrease the DIN abrasion of the rubber composition to a value of 62 as compared to a value of 78 for the Control rubber Sample E without the surface oxidized carbon black.

Therefore, it is concluded that substituting the oxidized rubber reinforcing carbon black for rubber reinforcing carbon black in a rubber composition comprised of natural rubber resulted in a significant beneficial reduction of the rubber composition's hysteresis, with a small penalty of reduction in its tear resistance, but with an improved (reduced) predictive treadwear based on the laboratory abrasion test. It can therefore be observed that in the case of each of these Examples, an increase of natural rubber content in the rubber composition provided more significant improvement in both rebound and tan delta properties, which would provide the greatest beneficial reduction in hysteresis for tire compounds based on high levels of natural rubber or all natural rubber in the rubber compositions.

### EXAMPLE IV

Rubber compositions were prepared in the manner of Example I except that use of synthetic cis 1,4-polyisoprene rubber was evaluated compared to use of natural cis 1,4polyisoprene for a rubber composition containing rubber reinforcing carbon black with an oxidized surface.

Control rubber Samples G and H contained the natural cis 1,4-polyisoprene. Control rubber Sample G contained the N234 rubber reinforcing carbon black. Control rubber Sample H contained the surface oxidized N234 carbon black.

Experimental rubber Samples I and J were similar to Control rubber Samples G and H, respectively, except that they contained the synthetic cis 1,4-polyisoprene instead of the natural cis 1,4-polyisoprene.

The rubber Samples were tested in the manner of Example I.

The following Table 5 illustrates cure behavior and various physical properties of rubber compositions.

**Table 5**

| Material | Parts by Weight (phr) | | | |
|---|---|---|---|---|
| | Control | | Experimental | |
| | Sample G | Sample H | Sample I | Sample J |
| Natural rubber (cis 1,4-polyisoprene rubber) | 100 | 100 | 0 | 0 |
| Synthetic cis 1,4-polyisoprene rubber | 0 | 0 | 100 | 100 |
| Rubber reinforcing carbon black (N234) | 50 | 0 | 50 | 0 |
| Surface oxidized N234 carbon black | 0 | 50 | 0 | 50 |
| | | | | |

| Properties of Rubber Compounds Processability of Uncured Rubber, RPA¹ | | | | |
|---|---|---|---|---|
| Uncured storage modulus (G'), (kPa) 0.83 Hertz, 100°C, 15% strain | 144 | 167 | 145 | 138 |
| | | | | |

| High Strain, Tensile Test | | | | |
|---|---|---|---|---|
| Modulus, 300% strain, (MPa) | 11.4 | 11 | 10.2 | 10.1 |
| | | | | |

| Hysteresis, Predictive | | | | |
|---|---|---|---|---|
| Rebound (100°C, %, higher is better) | | | | |
| ARES Test⁴, 10 Hz, 10% strain, 90°C | 56 | 73 | 58 | 68 |
| Tan delta (lower is better) | 0.197 | 0.073 | 0.207 | 0.107 |
| | | | | |

| Predictive Treadwear Resistance | | | | |
|---|---|---|---|---|
| DIN abrasion⁴ (lower values are better) | 138 | 142 | 135 | 135 |

The RPA, ARES and DIN Abrasion tests are described in previous Examples.

From Table 5 it is observed that:

### (A) Processability of the Uncured Rubber Composition

Substitution of the surface oxidized carbon black in the natural rubber containing compound (Control rubber Sample H) is observed to increase the uncured storage modulus (G') of the rubber composition to a value of 167 kPa compared to a value of 144 kPa for natural rubber Control rubber Sample G which contained carbon black which had not been surface oxidized. This could be related to an interaction of the oxidized carbon black with the natural rubber during mixing. In contrast, a similar addition of oxidized carbon black to a synthetic polyisoprene rubber containing rubber composition, Experimental rubber Samples I and J, resulted in a decrease of uncured rubber viscosity, suggesting a lesser reaction, or interaction, of the oxidized rubber reinforcing carbon black with synthetic polyisoprene rubber as compared to a greater interaction with the uncured natural cis 1,4-polyisoprene rubber.

### (B) Stiffness of Cured Rubber. High Strain (300 percent) Modulus

Substitution of the surface oxidized carbon black is observed to slightly decrease the 300 percent modulus of both natural rubber (Control rubber Sample H) and synthetic polyisoprene (Experimental rubber Sample J).

### (C) Hysteresis Prediction

Substitution of the surface oxidized carbon black beneficially increased the hot rebound property for Control rubber Sample H and Experimental rubber Sample J, which contained the oxidized carbon black. The natural rubber containing sample H showed a larger increase of the hot rebound property than the synthetic polyisoprene sample J, suggesting an improved interaction of the oxidized carbon black with natural rubber as compared to synthetic polyisoprene rubber for the respective rubber samples. This observation is considered to be a discovery and not expected, based on the microstructure similarity of the two elastomers. The tan delta data also shows a more significant improvement, or reduction, for the natural rubber containing Control rubber Sample H than the synthetic rubber containing Experimental rubber Sample J which is also a significant predictive beneficial reduction in the hysteresis of the natural rubber based rubber composition containing the oxidized rubber reinforcing carbon black.

### EXAMPLE V

Rubber compositions were prepared in the manner of Example I except that the elastomers were comprising a combination of natural cis 1,4-polyisoprene and cis 1,4-polybutadiene elastomers in a 85/15 weight ratio and the reinforcing fillers were comprising carbon black and precipitated silica.

Control rubber Sample K contained silica and coupler with conventional rubber reinforcing carbon black and Experimental rubber Sample L contained silica and coupler with oxidized rubber reinforcing carbon black substituted for the conventional rubber reinforcing carbon black.

The rubber Samples were tested in the manner of Example I. The following Table 6 illustrates processing behavior and various physical properties of Samples K and L.

**Table 6**

| Material | Parts by Weight (phr) | |
|---|---|---|
| | Control Sample K | Experimental Sample L |
| Natural rubber (cis 1,4-polyisoprene rubber) | 85 | 85 |
| Cis 1,4-polybutadiene rubber | 15 | 15 |
| Rubber reinforcing carbon black (N234) | 35 | 0 |
| Surface oxidized N234 carbon black | 0 | 35 |
| Precipitated silica | 20 | 20 |
| | | |

| Properties of Rubber Compounds Processability of Uncured Rubber, RPA¹ | | |
|---|---|---|
| Uncured storage modulus (G'), (kPa) 0.83 Hertz, 100°C, 15% strain | 196 | 206 |
| | | |

| Stiffness of Cured Rubber Low Strain, ARES Test² | | |
|---|---|---|
| Storage modulus (G'). (kPa) 10 Hertz, 10% strain, 90°C | 1553 | 1595 |
| | | |

| High Strain, Tensile Test | | |
|---|---|---|
| Modulus, 300% strain, (MPa) | 15.6 | 13.7 |
| | | |

| Hysteresis Predictive | | |
|---|---|---|
| Rebound (100°C, %, higher is better) | 70 | 76 |
| | | |

| ARES Test², 10 Hz, 10% strain, 90°C | | |
|---|---|---|
| Tan delta (lower is better) | 0.093 | 0.084 |
| | | |

| Tear Resistance, 95°C³ | | |
|---|---|---|
| Newtons (higher is better) | 148 | 157 |
| | | |

| Predictive Treadwear Resistance | | |
|---|---|---|
| DIN abrasion (lower values are better) | 61 | 91 |

The RPA, ARES, tear resistance, and abrasion tests are referred to in previous Examples.

From Table 6 it is observed that substitution of the surface oxidized rubber reinforcing carbon black for conventional rubber reinforcing carbon black in a rubber composition containing precipitated silica reinforcing filler (Experimental rubber Sample L) provided a beneficial improvement in predictive reduction in hysteresis of the rubber composition as evidenced by a combination of higher rebound and lower tan delta properties, and an improvement in higher tear strength and a loss of abrasion resistance.

## Claims

1. A pneumatic tire, preferably a heavy duty pneumatic tire or truck tire, the tire having a circumferential tread of a cap/base configuration comprising a circumferential outer tread cap rubber layer which contains a running surface for the tire and a tread base rubber layer at least partially underlying said tread cap rubber layer, wherein said tread cap rubber layer or said tread cap rubber layer and said tread base rubber layer comprises a rubber composition containing, based on parts by weight per 100 parts by weight elastomer (phr),
(A) 100 parts by weight conjugated diene-based elastomer(s) comprising:
(1) natural cis 1,4-polyisoprene rubber, or
(2) natural cis 1,4-polyisoprene rubber and from 5 up to 50 phr of an additional synthetic diene-based rubber comprising at least one of synthetic cis 1,4-polyisoprene rubber, cis 1,4 polybutadiene rubber and styrene/butadiene rubber; and
(B) 30 to 100 phr of a rubber reinforcing filler containing oxidized rubber reinforcing carbon black having from 3 to 8 percent of its surface containing a combination of carboxyl and hydroxyl groups, wherein the reinforcing filler is:
(1) carbon black comprising at least one of rubber reinforcing carbon black and said oxidized rubber reinforcing carbon black, provided that said carbon black contains from 25 to 100 weight percent of said oxidized carbon back, or
(2) a combination of precipitated silica and carbon black comprising from 5 to 40 weight percent of said silica, where said carbon black comprises at least one of rubber reinforcing carbon black and oxidized rubber reinforcing carbon black, provided that said carbon black contains from 25 to 100 weight percent of said oxidized rubber reinforcing carbon black, and further comprising a silica coupler having a moiety reactive with hydroxyl groups on the surface of the silica and another different moiety interactive with the conjugated diene-based elastomers.

2. The pneumatic tire of claim 1 wherein said oxidized rubber reinforcing carbon black is an ozone and/or hydrogen peroxide oxidized rubber reinforcing carbon black.

3. The pneumatic tire of at least one of the previous claims said synthetic rubber is cis 1,4-polybutadiene rubber.

4. The pneumatic tire of at least one of the previous claims wherein said natural cis 1,4-polyisoprene rubber contains from 2 to 7 percent protein, fatty acid, resin and organic salt.

5. The pneumatic tire of at least one of the previous claims wherein said combination of rubber reinforcing carbon black and oxidized rubber reinforcing carbon black comprises from 50 to 75 weight percent of said oxidized rubber reinforcing carbon black.

6. The pneumatic tire of claim 5 wherein the oxidized rubber reinforcing carbon black has from 4 to 8 percent of its surface containing a combination of carboxyl and hydroxyl groups.

7. The tire of claim 1 wherein the tread cap layer rubber composition comprises natural cis 1,4-polyisoprene elastomer and a reinforcing filler comprising said combination of rubber reinforcing carbon black and said oxidized rubber reinforcing carbon black.

8. The tire of claim 7 wherein the tread base layer rubber composition comprises natural cis 1,4-polyisoprene and a rubber reinforcing filler comprising rubber reinforcing carbon black.

9. The tire of claim 1, 7 or 8 wherein the tread cap layer rubber composition comprises from 5 to 50 phr, alternatively from 10 to 20 phr, of synthetic rubber comprising at least one of cis 1,4-polybutadiene rubber and styrene/butadiene rubber.

10. The tire of claim 1 wherein the tread base layer rubber composition comprises natural cis 1,4-polyisoprene elastomer and a reinforcing filler comprising said combination of rubber reinforcing carbon black and said oxidized rubber reinforcing carbon black.

11. The tire of claim 1 wherein the tread cap layer rubber composition comprises natural cis 1,4-polyisoprene and a rubber reinforcing filler comprising rubber reinforcing carbon black.

12. The tire of claim 1 wherein the tread base layer rubber composition comprises from 5 to 50 phr, alternatively from 10 to 30 or from 10 to 20 phr, of synthetic rubber comprising at least one of cis 1,4-polybutadiene rubber and styrene/butadiene rubber.

## Patentansprüche

1. Luftreifen, vorzugsweise ein Schwerlastluftreifen oder Lastkraftwagenreifen, wobei der Reifen eine umlaufende Lauffläche einer Deck-/Basis-Konfiguration aufweist, die eine umlaufende äußere Laufflächendeckkautschuklage umfasst, die eine Laufoberfläche für den Reifen und eine Laufflächenbasiskautschuklage enthält, die wenigstens teilweise unter der Laufflächendeckkautschuklage liegt, wobei die Laufflächendeckkautschuklage oder die Laufflächendeckkautschuklage und die Laufflächenbasiskautschuklage eine Kautschukzusammensetzung umfassen, die, basierend auf Gewichtsteilen pro 100 Gewichtsteile Elastomer (phr), Folgendes enthält:
(A) 100 Gewichtsteile konjugierter Elastomer(e) auf Dienbasis, die Folgendes umfassen:
(1) natürlichen cis-1,4-Polyisoprenkautschuk oder
(2) natürlichen cis-1,4-Polyisoprenkautschuk und von 5 bis zu 50 phr eines zusätzlichen synthetischen Kautschuks auf Dienbasis, der synthetischen cis-1,4-Polyisoprenkautschuk, cis-1,4-Polybutadienkautschuk und/oder Styrol-/Butadienkautschuk umfasst; und
(A) 30 bis 100 phr eines kautschukverstärkenden Füllstoffs, der oxidierten kautschukverstärkenden Industrieruß enthält, der von 3 bis 8 % seiner Oberfläche aufweist, die eine Kombination aus Carboxyl- und Hydroxylgruppen enthält, wobei der verstärkende Füllstoff Folgendes ist:
(1) Industrieruß, der kautschukverstärkenden Industrieruß und/oder den oxidierten kautschukverstärkenden Industrieruß umfasst, vorausgesetzt, dass der Industrieruß von 25 bis 100 Gew.-% des oxidierten Industrierußes enthält, oder
(2) eine Kombination aus ausgefälltem Siliciumdioxid und Industrieruß, die von 5 bis 40 Gew.-% des Siliciumdioxids umfasst, wobei der Industrieruß kautschukverstärkenden Industrieruß und/oder oxidierten kautschukverstärkenden Industrieruß umfasst, vorausgesetzt, dass der Industrieruß von 25 bis 100 Gew.-% des oxidierten kautschukverstärkenden Industrierußes enthält, und die ferner einen Siliciumdioxidkoppler umfasst, der ein Molekülteil, das mit Hydroxylgruppen auf der Oberfläche des Siliciumdioxids reaktiv ist, und ein anderes unterschiedliches Molekülteil aufweist, das mit den konjugierten Elastomeren auf Dienbasis interagiert.

2. Luftreifen nach Anspruch 1, wobei der oxidierte kautschukverstärkende Industrieruß ein mit Ozon und/oder Wasserstoffperoxid oxidierter kautschukverstärkender Industrieruß ist.

3. Luftreifen nach wenigstens einem der vorhergehenden Ansprüche, wobei der synthetische Kautschuk cis-1,4-Polybutadienkautschuk ist.

4. Luftreifen nach wenigstens einem der vorhergehenden Ansprüche, wobei der natürliche cis-1,4-Polyisoprenkautschuk von 2 bis 7 % Protein, Fettsäure, Harz und organisches Salz enthält.

5. Luftreifen nach wenigstens einem der vorhergehenden Ansprüche, wobei die Kombination aus kautschukverstärkendem Industrieruß und oxidiertem kautschukverstärkendem Industrieruß von 50 bis 75 Gew.-% des oxidierten kautschukverstärkenden Industrierußes umfasst.

6. Luftreifen nach Anspruch 5, wobei der oxidierte kautschukverstärkende Industrieruß von 4 bis 8 % seiner Oberfläche aufweist, die eine Kombination aus Carboxyl- und Hydroxylgruppen enthält.

7. Reifen nach Anspruch 1, wobei die Kautschukzusammensetzung der Laufflächendecklage natürliches cis-1,4-Polyisoprenelastomer und einen verstärkenden Füllstoff umfasst, der die Kombination aus kautschukverstärkendem Industrieruß und dem oxidierten kautschukverstärkenden Industrieruß umfasst.

8. Reifen nach Anspruch 7, wobei die Kautschukzusammensetzung der Laufflächenbasislage natürliches cis-1,4-Polyisopren und einen kautschukverstärkenden Füllstoff umfasst, der kautschukverstärkenden Industrieruß umfasst.

9. Reifen nach Anspruch 1, 7 oder 8, wobei die Kautschukzusammensetzung der Laufflächendecklage von 5 bis 50 phr, alternativ von 10 bis 20 phr, synthetischen Kautschuk umfasst, der cis-1,4-Polybutadienkautschuk und/oder Styrol-/Butadienkautschuk umfasst.

10. Reifen nach Anspruch 1, wobei die Kautschukzusammensetzung der Laufflächenbasislage natürliches cis-1,4-Polyisoprenelastomer und einen verstärkenden Füllstoff umfasst, der die Kombination aus kautschukverstärkendem Industrieruß und dem oxidierten kautschukverstärkenden Industrieruß umfasst.

11. Reifen nach Anspruch 1, wobei die Kautschukzusammensetzung der Laufflächendecklage natürliches cis-1,4-Polyisopren und einen kautschukverstärkenden Füllstoff umfasst, der kautschukverstärkenden Industrieruß umfasst.

12. Reifen nach Anspruch 1, wobei die Kautschukzusammensetzung der Laufflächenbasislage von 5 bis 50 phr, alternativ von 10 bis 30 oder von 10 bis 20 phr, synthetischen Kautschuk umfasst, der cis-1,4-Polybutadienkautschuk und/oder Styrol-/Butadienkautschuk umfasst.

## Revendications

1. Bandage pneumatique, de préférence bandage pneumatique destiné à un poids-lourd ou bandage pneumatique destiné à un camion, le bandage pneumatique possédant une bande de roulement en direction circonférentielle qui possède une configuration du type chape/base qui comprend une couche de caoutchouc de chape de la bande de roulement externe en direction circonférentielle qui contient une surface de roulement pour le bandage pneumatique et une couche de caoutchouc de base de la bande de roulement qui est au moins en partie sous-jacente à ladite couche de caoutchouc de chape de la bande de roulement ; dans lequel ladite couche de caoutchouc de chape de la bande de roulement ou bien ladite couche de caoutchouc de chape de roulement et ladite couche de caoutchouc de base de la bande de roulement comprend/comprennent une composition de caoutchouc qui contient, en se basant sur des parties en poids par 100 parties en poids d'élastomère (phr) :
(A) 100 parties en poids d'un ou de plusieurs élastomères à base de diène conjugué, qui comprend/comprennent :
(1) du caoutchouc naturel de 1,4-cis polyisoprène ;
(2) du caoutchouc naturel de 1,4-cis polyisoprène et de 5 jusqu'à 50 phr d'un caoutchouc synthétique supplémentaire à base de diène qui comprend au moins un caoutchouc synthétique qui est choisi parmi un caoutchouc synthétique de 1,4-cis polyisoprène, un caoutchouc synthétique de 1,4-cis polybutadiène et un caoutchouc synthétique de styrène/butadiène ; et
(B) de 30 à 100 phr d'une matière de charge pour le renforcement du caoutchouc qui contient du noir de carbone oxydé pour le renforcement du caoutchouc qui possède une combinaison de groupes carboxyle et de groupes hydroxyle sur une étendue de 3 à 8 % de sa surface ; dans lequel la matière de charge pour le renforcement représente :
(1) du noir de carbone qui comprend au moins un noir de carbone qui est choisi parmi du noir de carbone pour le renforcement du caoutchouc et ledit noir de carbone oxydé pour le renforcement du caoutchouc, avec cette condition que le noir de carbone en question contient de 25 à 100 % en poids dudit noir de carbone oxydé ; ou
(2) une combinaison de silice précipitée et de noir de carbone, qui comprend de 5 à 40 % en poids de ladite silice ; dans laquelle ledit noir de carbone comprend au moins un noir de carbone qui est choisi parmi du noir de carbone pour le renforcement du caoutchouc et ledit noir de carbone oxydé pour le renforcement du caoutchouc, avec cette condition que le noir de carbone en question contient de 25 à 100 % en poids dudit noir de carbone oxydé ; et qui comprend en outre un agent de couplage pour la silice qui possède une fraction apte à réagir avec des groupes hydroxyle sur la surface de la silice et une autre fraction différente apte à entrer en interaction avec les élastomères à base de diènes conjugués.

2. Bandage pneumatique conformément à la revendication 1, dans lequel ledit noir de carbone oxydé pour le renforcement du caoutchouc représente un noir de carbone pour le renforcement du caoutchouc oxydé avec de l'ozone et/ou un noir de carbone oxydé avec du peroxyde d'hydrogène,.

3. Bandage pneumatique conformément à au moins une des revendications précédentes, dans lequel ledit caoutchouc synthétique représente un caoutchouc synthétique de 1,4-cis polybutadiène.

4. Bandage pneumatique conformément à au moins une des revendications précédentes, dans lequel ledit caoutchouc naturel de 1,4-cis polyisoprène contient de 2 à 5 % de protéines, d'acides gras, de résine et de sels organiques.

5. Bandage pneumatique conformément à au moins une des revendications précédentes, dans lequel ladite combinaison du noir de carbone pour le renforcement du caoutchouc et du noir de carbone oxydé pour le renforcement du caoutchouc comprend de 50 à 75 % en poids dudit noir de carbone oxydé pour le renforcement du caoutchouc.

6. Bandage pneumatique conformément à la revendication 5, dans lequel le noir de carbone oxydé pour le renforcement du caoutchouc contient une combinaison de groupes carboxyle et de groupes hydroxyle sur une étendue de 4 à 8 % de sa surface.

7. Bandage pneumatique conformément à la revendication 1, dans lequel la composition du caoutchouc de la couche de chape de la bande de roulement comprend un élastomère naturel de 1,4-cis polyisoprène et une matière de charge pour le renforcement qui comprend ladite combinaison du noir de carbone pour le renforcement du caoutchouc et dudit noir de carbone oxydé pour le renforcement du caoutchouc.

8. Bandage pneumatique conformément à la revendication 7, dans lequel la composition du caoutchouc de la couche de base de la bande de roulement comprend un élastomère naturel de 1,4-cis polyisoprène et une matière de charge pour le renforcement qui comprend du noir de carbone pour le renforcement du caoutchouc.

9. Bandage pneumatique conformément à la revendication 1, 7 ou 8, dans lequel la composition du caoutchouc de la couche de chape de la bande de roulement comprend, à concurrence de 5 à 50 phr, en variante de 10 à 20 phr, un caoutchouc synthétique qui comprend au moins un caoutchouc synthétique choisi parmi un caoutchouc synthétique de 1,4-cis polybutadiène et un caoutchouc synthétique de styrène/butadiène.

10. Bandage pneumatique conformément à la revendication 1, dans lequel la composition du caoutchouc de la couche de base de la bande de roulement comprend un élastomère naturel de 1,4-cis polyisoprène et une matière de charge pour le renforcement qui comprend ladite combinaison du noir de carbone pour le renforcement du caoutchouc et dudit noir de carbone oxydé pour le renforcement du caoutchouc.

11. Bandage pneumatique conformément à la revendication 1, dans lequel la composition du caoutchouc de la couche de chape de la bande de roulement comprend un élastomère naturel de 1,4-cis polyisoprène et une matière de charge pour le renforcement qui comprend du noir de carbone pour le renforcement du caoutchouc.

12. Bandage pneumatique conformément à la revendication 1, dans lequel la composition du caoutchouc de la couche de base de la bande de roulement comprend, à concurrence de 5 à 50 phr, en variante de 10 à 30 phr ou de 10 à 20 phr, un caoutchouc synthétique qui comprend au moins un caoutchouc synthétique choisi parmi un caoutchouc synthétique de 1,4-cis polybutadiène et un caoutchouc synthétique de styrène/butadiène.
